# EUROPÄISCHE PATENTSCHRIFT

(11) **EP 3 582 388 B1**
(45) Veröffentlichungstag und Bekanntmachung des Hinweises auf die Patenterteilung: **29.11.2023**
(21) Anmeldenummer: 19170493.1
(22) Anmeldetag: 23.04.2019
(51) Int. Cl.: H02P 6/00, H02P 6/08, H02P 6/10

(54) **ELEKTROMOTORSYSTEM**
ELECTRIC MOTOR SYSTEM
SYSTÈME DE MOTEUR ÉLECTRIQUE

(30) Priorität: 13.06.2018 DE 102018209471
(43) Veröffentlichungstag der Anmeldung: 18.12.2019
(73) Patentinhaber: Mahle International GmbH, 70376 Stuttgart (DE)
(72) Erfinder: BUCHALI, Tim, 70374 Stuttgart (DE); CRAMME, Markus, 72218 Wildberg (DE); HETZ, Tobias, 73733 Esslingen (DE); MATERN, Jochen, 70825 Korntal (DE); THIERER, Michael, 73732 Esslingen (DE)
(74) Vertreter: BRP Renaud & Partner mbB Rechtsanwälte Patentanwälte Steuerberater

(56) Entgegenhaltungen:
- WO-A1-2007/144753
- WO-A1-2016/173680
- DE-A1-102016 215 762
- JP-A- 2003 153 579
- MEINGUET FABIEN ET AL: "Fault-tolerant operation of an open-end winding five-phase PMSM drive with inverter faults", IECON 2013 - 39TH ANNUAL CONFERENCE OF THE IEEE INDUSTRIAL ELECTRONICS SOCIETY, IEEE, 10. November 2013 (2013-11-10), Seiten 5191-5196, XP032538767, ISSN: 1553-572X, DOI: 10.1109/IECON.2013.6699978 [gefunden am 2013-12-30]
- MOHAMMADPOUR ALI ET AL: "Asymmetrical multi-lane multi-phase motor drives", 2014 IEEE APPLIED POWER ELECTRONICS CONFERENCE AND EXPOSITION - APEC 2014, IEEE, 16. März 2014 (2014-03-16), Seiten 2482-2487, XP032591000, DOI: 10.1109/APEC.2014.6803652 [gefunden am 2014-04-21]

## Beschreibung

Die vorliegende Erfindung betrifft ein Elektromotorsystem mit einem Elektromotor sowie einer Leistungselektronik zur elektrischen Versorgung des Elektromotors. Die Erfindung betrifft des Weiteren ein Kraftfahrzeug mit einem solchen Elektromotorsystem.

Elektromotoren weisen üblicherweise drei Spulen auf, die im Betrieb eine, in der Regel permanentmagnetische, Motorwelle des Elektromotors antreiben. Diese Spulen sind üblicherweise jeweils Bestandteil eines Stranges oder einer Phase des Elektromotors, so dass der Elektromotor drei Phasen bzw. drei Stränge aufweist, die in einem Statormodul zusammengefasst sind. Die Spulen und Stränge des Statormoduls sind in der Regel über Halbbrücken der Leistungselektronik elektrisch versorgt. Zudem sind die Spulen über eine sogenannte Sternschaltung oder Dreieckschaltung miteinander verbunden. Dies führt üblicherweise dazu, dass beim Ausfall einer der Spulen auch die übrigen Spulen des Statormoduls ausfallen und/oder zu einer erheblichen Betriebsstörung des Elektromotors.

Bei betriebskritischen Anwendungen, in denen ein Ausfall des Elektromotors verhindert oder die Wahrscheinlichkeit eines Ausfalls zumindest reduziert werden soll, ist es bekannt, im Elektromotor insgesamt sechs Spulen vorzusehen, wobei jeweils drei der Spulen zu einem Statormodul zusammengefasst sind und die Spulen des jeweiligen Statormoduls wiederum über Halbbrücken und eine Sternschaltung oder Dreieckschaltung miteinander kontaktiert sind. In einem zugehörigen Elektromotorsystem ist das jeweilige Modul über eine Leistungselektronik des Systems elektrisch versorgt. Ein Ausfall einer Spule des jeweiligen Moduls führt hierbei zu einem Ausfall der übrigen Spulen des Statormoduls.

Der Einsatz derartiger Elektromotorsysteme in einem Fahrzeug, in dem der Elektromotor als Bestandteil einer Servolenkung zum Einsatz kommt, ist beispielsweise aus der DE 10 2015 213 304 A1 und der EP 2 030 304 B1 bekannt.

Der Artikel "Fault-tolerant operation of an open-end winding five-phase PMSM drive with inverter faults" in "IECON 2013 - 39th Annual Conference of the IEEE Industrial Electronics Society", beschreibt eine Modellierung eines fünfphasigen Permanentmagnetsynchronmotors mit einer sog. "Open-end winding" Topologie. Die jeweilige Phase besitzt ein offense Ende, wobei den ersten Enden der Phase nein erster Inverter und den zweiten Enden der Phasen ein zweiter Inverter zugeordnet ist.

Der Artikel "Asymmetrical multi-lane multi-phase motor drives" in "2014 IEEE Applied Power Electronics Conference and Exposition - APEC 2014" behandelt einen mehrphasigen Motor mit einer sog. "Multi-Lane" Topologie. Beschrieben wird dabei eine asymmetrische "Multi-Lane" Topologie. Die JP 2013 153579 A zeigt ein System mit einem Elektromotor, einer Steuereinrichtung sowie einer Leistungselektronik.

Die vorliegende Erfindung beschäftigt sich mit der Aufgabe, für ein Elektromotorsystem der vorstehend genannten Art sowie für ein Kraftfahrzeug mit einem solchen Elektromotorsystem verbesserte oder zumindest andere Ausführungsformen anzugeben, die sich insbesondere durch eine verbesserte Sicherung gegen einen Betriebsausfall und/oder einen bauraumsparenderen Aufbau und/oder einen flexibleren Einsatz auszeichnen.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, in einem Elektromotorsystem mit einem Elektromotor und einer Leistungselektronik zur elektrischen Versorgung des Elektromotors, den Elektromotor mit zumindest vier Spulen zu versehen, welche über die Leistungselektronik jeweils separat elektrisch versorgt sind. Dies erlaubt es, beim Ausfall von zumindest einer der Spulen den Betrieb des Elektromotors weiter zu gewährleisten, sofern zumindest zwei der Spulen weiterhin funktionsfähig sind. Im Gegensatz zu den aus dem Stand der Technik bekannten Lösungen führt also der Ausfall einer Spule nicht zwangsläufig zum Ausfall der anderen Spulen oder eines zugehörigen Statormoduls. In der Folge sind die Betriebssicherheit und die Verfügbarkeit erhöht sowie die Ausfallwahrscheinlichkeit des Elektromotors reduziert. Zudem lässt sich der Elektromotor hierdurch variabler einsetzen und betreiben.

Dem Erfindungsgedanken entsprechend weist das Elektromotorsystem den Elektromotor auf, wobei der Elektromotor wenigstens vier Spulen aufweist, welche im Betrieb eine Motorwelle des Elektromotors antreiben. Die Leistungselektronik dient der elektrischen Versorgung der Spulen und weist für zumindest vier der wenigstens vier Spulen jeweils eine zugehörige Brückenschaltung auf, so dass diese zumindest vier Spulen mit der jeweils zugehörigen Brückenschaltung von der Leistungselektronik unabhängig voneinander versorgt sind.

Die jeweilige Spule bildet dabei eine Phase oder einen Strang, wobei für die jeweilige Spule und somit für die jeweilige Phase oder für den jeweiligen Strang eine eigene, separate Brückenschaltung, vorgesehen ist.

Der Elektromotor sowie die Spulen können prinzipiell beliebig ausgestaltet sein. Insbesondere kann es sich bei dem Elektromotor um eine elektrisch erregte Synchronmaschine (EESM), eine Permanentmagnet-Synchronmaschine (PMSM), eine, insbesondere bürstenlose, Gleichstrommaschine oder eine Asynchronmaschine (ASM) handeln.

Prinzipiell kann die Brückenschaltung für zumindest eine der Spulen als eine Halbbrücke ausgestaltet sein. Bevorzugt ist in diesem Fall die andere Halbbrücke keiner anderen Spule des Elektromotors zugeordnet.

Als vorteilhaft erweisen sich Ausführungsformen, bei denen zumindest eine der Brückenschaltungen, bevorzugt die jeweilige Brückenschaltung, der Leistungselektronik für die zumindest vier Spulen als eine Vollbrücke ausgebildet ist. Somit hat die jeweilige Spule, die über eine zugehörige Vollbrücke versorgt ist, zwei zugehörige, von anderen Kontakten der Spulen getrennte Verbindungen bzw. Kontakte zur Leistungselektronik. Dies führt zu einer Verbesserung der unabhängigen elektrischen Versorgung der Spulen. Darüber hinaus lassen sich die Spulen somit jeweils variabel elektrisch versorgen.

Der Elektromotor weist vorteilhaft zumindest fünf Spulen auf. Die Leistungselektronik weist dabei für die jeweilige Spule eine zugehörige Brückenschaltung, vorzugsweise Vollbrücke, auf. Somit kann der Elektromotor weiterhin betrieben werden, wenn auch eine erhöhte Anzahl von Spulen ausfallen, sofern weiterhin zumindest zwei drei Spulen funktionsfähig sind. Bei lediglich zwei funktionsfähigen Spulen kann der Betrieb mit einem sogenannten Sling-Shot-Verfahren realisiert sein, indem die Motorwelle in den Abschnitten des funktionsfähigen Spulen derart beschleunigt wird, dass sie den Abschnitt der zumindest einen ausgefallenen Spule überwindet.

Vorteilhaft weist der Elektromotor fünf Spulen auf, wobei die Leistungselektronik für die jeweilige der fünf Spulen eine zugehörige Brückenschaltung, insbesondere eine zugehörige Vollbrücke, aufweist. Im Vergleich zu den aus dem Stand der Technik bekannten Lösungen mit insgesamt sechs Spulen ist bei einem derartigen Elektromotorsystem also eine Spule weniger vorhanden, wobei zwei der Spulen ausfallen können und der Betrieb des Elektromotors über die übrigen drei Spulen weiter gewährleistet ist. Es existieren also fünf Phasen mit jeweils einer zugehörigen Brückenschaltung, also insgesamt fünft unabhängige Brückenschaltungen, insbesondere Vollbrücken.

Die Spulen des Elektromotors können jeweils unterschiedlich ausgebildet sein. Die Spulen können also prinzipiell unterschiedlich gewickelt sein, unterschiedlichen Anzahlen von Wicklungen aufweisen und dergleichen

Bevorzugt sind die Spulen des Elektromotors identisch ausgebildet. Somit lässt sich das Elektromotorsystem kostengünstiger und einfacher herstellen und realisieren. Insbesondere erzeugen die Spulen somit jeweils das gleiche Magnetfeld, wenn sie identisch elektrisch versorgt sind.

Vorstellbar sind Varianten, bei denen zumindest zwei der Brückenschaltungen mit voneinander unabhängigen oder getrennten elektrischen Quellen verbunden und somit versorgt sind. Dies führt zu einer Variabilität und/oder einer weiteren Sicherung des Elektromotors gegen Ausfälle.

Vorstellbar sind auch Ausführungsformen, bei denen zumindest zwei der Brückenschaltungen parallel zueinander mit elektrischen Potentialen verbunden sind. Folglich hat ein Ausfall einer der Brückenschaltungen keinen Ausfall der anderen Brückenschaltung zur Folge hat. Hierdurch wird die Betriebssicherheit des Elektromotorsystems verbessert. Zudem führ dies zu einem vereinfachten Aufbau des Elektromotorsystems.

Das Elektromotorsystem weist zweckmäßig eine Steuereinrichtung auf, mit dem sich das Elektromotorsystem betreiben lässt.

Hierbei kann das Elektromotorsystem in einer beliebigen Anwendung zum Einsatz kommen. Insbesondere kann das Elektromotorsystem Bestandteil eines Kraftfahrzeugs sein. Im Kraftfahrzeug kann der Elektromotor des Elektromotorsystems Bestandteil einer Lenkungsunterstützungseinrichtung, insbesondere einer Servolenkung, eines Lenkungsantriebs, einer Bremsanlage oder einer Pumpe, beispielsweise einer Kraftstoffpumpe, eine Kühlmittelpumpe, eine Ölpumpe und dergleichen, sein.

Die zumindest vier Spulen des Elektromotors erlauben es, die jeweiligen Spulen bedarfsgerecht anzusteuern und elektrisch zu versorgen.

Erfindungsgemäß erfolgt die Ermittlung einer Leistungsanforderung an den Elektromotor, das heißt, es wird ermittelt, welche mechanische Leistung, also insbesondere welches Drehmoment, der Elektromotor in der zugehörigen Anwendung im Augenblick oder nachfolgend liefern soll. Mit anderen Worten: es wird eine Soll-Leistung bzw. Soll-Drehmoment des Elektromotors ermittelt. Die elektrische Versorgung zumindest einer der Spulen wird reduziert, wenn die vom Elektromotor momentan gelieferte Leistung bzw. das momentan zur Verfügung gestellte Drehmoment, also die Ist-Leistung bzw. das Ist-Drehmoment, oberhalb der Leistungsanforderung, also der Soll-Leistung bzw. Soll-Drehmoment, liegt. Analog hierzu kann die elektrische Versorgung zumindest einer der Spulen erhöht werden, wenn die vom Elektromotor gelieferte Leistung bzw. das gelieferte Drehmoment, also die Ist-Leistung bzw. ist Drehmoment, unterhalb der Leistungsanforderung bzw. Drehmomentanforderung, also der Soll-Leistung bzw. dem Soll-Drehmoment, liegt.

Auch ist es vorstellbar, zumindest eine der Spulen zu deaktivieren, wenn die Leistungsanforderung oder Drehmomentanforderung, also die Soll-Leistung bzw. das Soll-Drehmoment, unterhalb der vom Elektromotor gelieferten Leistung bzw. des gelieferten Drehmoments, also der Ist-Leistung bzw. des Ist-Drehmoments, liegt, wobei dies zweckmäßig derart erfolgt, dass zumindest zwei, vorzugsweise zumindest drei, der Spulen weiterhin elektrisch versorgt und betrieben sind.

Bevorzugt erfolgt bei einem Auswahl einer der Spulen und/oder der Änderung der elektrischen Versorgung zumindest einer der Spulen eine Anpassung der elektrischen Versorgung der übrigen Spulen derart, dass die Motorwelle das Drehmoment weiterhin gleichmäßig, das heißt ohne einen Sprung, bereitstellt. Die Anpassung der elektrischen Versorgung der Spulen und/oder der Ausfall einer Spule werden also derart kompensiert, dass in der zugehörigen Anwendung und/oder für einen Benutzer keine plötzlichen Änderungen auftreten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:
- Fig. 1: eine stark vereinfachte, schaltplanartige Darstellung eines Kraftfahrzeugs mit einem Elektromotorsystem,
- Fig. 2: ein Blockschaltbild des Elektromotorsystems,
- Fig. 3: einen Schaltplan des Elektromotorsystems.

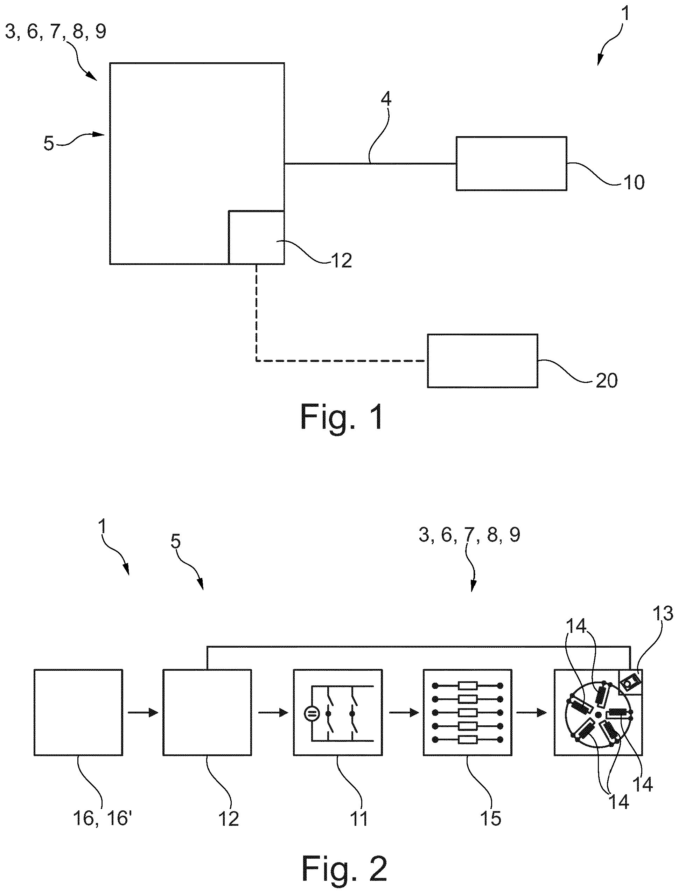

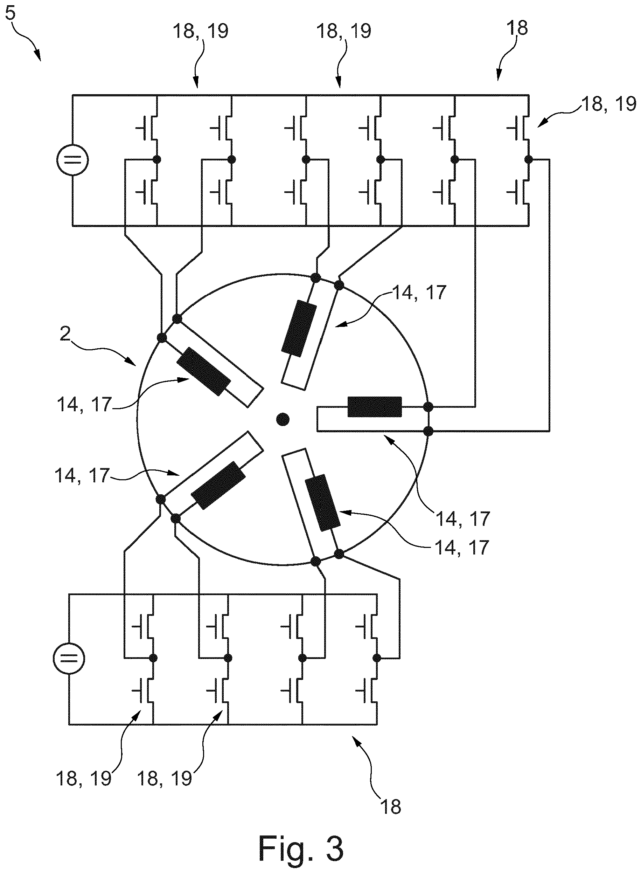

Ein Kraftfahrzeug 1, wie es in Figur 1 beispielhaft dargestellt ist, weist eine mit Hilfe eines Elektromotors 2 (vergleiche Figuren 2 und 3) angetriebene Einrichtung 3 auf. Der Elektromotor 2, nachfolgend auch kurz Motor 2 genannt, weist eine Motorwelle 4 auf und ist Bestandteil eines Elektromotorsystems 5, welches wiederum Bestandteil der Einrichtung 3 sein kann. Bei der Einrichtung 3 kann es sich insbesondere um eine Pumpe 6, eine Bremsanlage 7, einen Lenkungsantrieb 8, eine Servolenkung 9 und dergleichen handeln. Über die Motorwelle 4 wird dabei eine Komponente 10 der Einrichtung 1 angetrieben oder im Antrieb unterstützt.

Figur 2 zeigt eine schematische Darstellung des Elektromotorsystems 5. Demnach weist das Elektromotorsystem 5 neben dem Elektromotor 2 eine Leistungselektronik 11 zur elektrischen Versorgung des Elektromotors 2 sowie eine Steuereinrichtung 12 zum Steuern des Elektromotorsystems 5 auf. Die Steuereinrichtung 12 ist, wie mit Pfeilen angedeutet, derart mit der Leistungselektronik 11 und dem Elektromotor 2 verbunden, dass er diese steuern kann. Zudem ist die Steuereinrichtung 12 mit einer Motorsensorik 13 des Elektromotors 2 kommunizierend verbunden, so dass die Motorsensorik 13, wie mit einem entsprechenden Pfeil angedeutet, Informationen an die Steuereinrichtung 12 liefert. Der Elektromotor 2 weist zumindest vier Spulen 14 auf, wobei die Spulen 14 dem Antrieb der Motorwelle 4 dienen. Im gezeigten Beispiel sind die Spulen 14 jeweils identisch ausgebildet. Im gezeigten Beispiel weist das Elektromotorsystem 5 zudem eine Stromsensorik 15 auf, mit der die elektrische Versorgung des Elektromotors 2, insbesondere der Spulen 14, erfasst wird. Die Stromsensorik 15 ist, wie mit einem entsprechenden Pfeil angedeutet, kommunizierend mit der Steuereinrichtung 12 verbunden. Mit der Motorsensorik 13 und/oder der Stromsensorik 15 ist es insbesondere möglich, zu erkennen, ob die jeweilige Spule 14 funktionsbereit oder ausgefallen ist. Im gezeigten Beispiel weist das Elektromotorsystem 5 zudem eine Busschnittstelle 16, insbesondere einen CAN-Bus 16', auf, die der Steuereinrichtung 12 vorgeschaltet ist und Bestandteil des Kraftfahrzeugs 1, der Einrichtung 3 oder des Elektromotorsystems 5 sein kann.

Figur 3 zeigt den Elektromotor 2 sowie die Leistungselektronik 11 des Elektromotorsystems 5. Zu erkennen ist dabei, dass die Leistungselektronik 11, die in Figur 3 der besseren Übersicht halber in zwei Hälften dargestellt ist, für die jeweilige Spule 14, die eine Phase oder einen Strang 17 bildet, eine zugehörige Brückenschaltung 18 aufweist, die im gezeigten Beispiel als eine Vollbrücke 19 ausgebildet ist. Somit lässt sich die jeweilige Spule 14 und somit Phase 17 des Elektromotors 2 unabhängig von den übrigen Spulen 14 bzw. Phasen 17 des Elektromotors 2 steuern und elektrisch versorgen. Da für den Betrieb des Elektromotors 2, insbesondere zum Antreiben der Motorwelle 4, in der Regel drei Spulen 14 ausreichend sind, können dabei bis zu zwei der Spulen 14 ausfallen und der Betrieb des Elektromotors 2 trotzdem aufrecht erhalten bleiben. Im gezeigten Beispiel sind zudem die Brückenschaltungen 18, insbesondere Vollbrücken 19, parallel zueinander elektrisch versorgt, so dass zudem ein Ausfall einer der Brückenschaltungen 18 zu keinem Ausfall der anderen Brückenschaltungen 18 führt.

Die Steuereinrichtung 12 ist derart ausgestaltet, dass sie bei einem Ausfall einer der Spulen 14 die elektrische Versorgung der anderen Spulen 14 aufrechterhält. Zudem erzeugt die Steuereinrichtung 12 ein Hinweissignal, das über eine Signalausgabeeinrichtung 20 des Kraftfahrzeugs 1 zur akustischen und/oder optischen Ausgabe zumindest eines Signals, ausgegeben werden kann. Alternativ oder zusätzlich ist es vorstellbar, das Hinweissignal in einem nicht gezeigten Speicher des Elektromotorsystems 5 oder des Kraftfahrzeugs 1 zu hinterlegen bzw. zu speichern. Das Hinweissignal signalisiert dabei, dass eine der Spulen 14 ausgefallen ist, der Betrieb des Elektromotors 12 aber weiterhin aufrechterhalten werden kann, beispielsweise in einem Notfallbetrieb mit verringerter Leistung des Elektromotors 2. Ein weiteres Hinweissignal kann ausgegeben und/oder hinterlegt werden, wenn eine weitere Spule 14 ausfällt. Fällt eine weitere Spule 14 aus, erfolgt über die Steuereinrichtung 12 die Ausgabe eines Warnsignals, die wiederum über die Signalausgabeeinrichtung 20 ausgegeben und/oder im Speicher hinterlegt werden kann. Das Warnsignal signalisiert dabei, dass lediglich die Mindestanzahl an Spulen 14, nämlich zwei, zum Betreiben des Elektromotors 2 verfügbar sind und dass eine baldige Reparatur und/oder Besuch einer Werkstatt und dergleichen erfolgen soll. Mit dem Warnsignal kann zudem signalisiert werden, dass das Kraftfahrzeug 1 lediglich über eine vorgegebene Distanz weitergefahren werden kann.

Die Steuereinrichtung 12 ist in der Lage, eine mechanische Leistungsanforderung am Elektromotor 2, insbesondere eine Drehmomentanforderung am Elektromotor 2, zu ermitteln. Die Leistungsanforderung gibt dabei an, welche Leistung der Elektromotor 2 momentan oder in unmittelbarer Zukunft erbringen soll, ist also eine Soll-Leistung, die der Elektromotor 2 zu erbringen hat. Zum Ermitteln der Leistungsanforderung und/oder der Drehmomentanforderung kann die Steuereinrichtung 12 eine entsprechende, nicht gezeigte Sensorik aufweisen und/oder mit einem entsprechend ausgestatteten, nicht gezeigten Bestandteil des Kraftfahrzeugs 1 verbunden sein. Die Steuereinrichtung 12 ist zudem derart ausgestaltet, dass sie, insbesondere über die Motorsensorik 13 und/oder die Stromsensorik 15, ermitteln kann, welche Leistung und/oder welches Drehmoment der Motor 2 momentan erbringt, also welche Ist-Leistung bzw. welches Ist-Drehmoment der Elektromotor 2 liefert. Ist die Leistungsanforderung und/oder die Drehmomentanforderung, also die Soll-Leistung und/oder das Soll-Drehmoment, geringer als die momentan gelieferte Leistung bzw. als das momentan gelieferte Drehmoment, also die Ist-Leistung bzw. das Ist-Drehmoment, des Elektromotors 2, verringert die Steuereinrichtung 12 über die Leistungselektronik 11 die elektrische Versorgung zumindest einer der Spulen 14. Alternativ oder zusätzlich ist es vorstellbar, zumindest eine der Spulen 14 zu deaktivieren, sofern zumindest zwei, insbesondere drei, der Spulen 14 weiterhin elektrisch versorgt sind. Liegt die Leistungsanforderung bzw. die Drehmomentanforderung und somit die Soll-Leistung zw. das Soll-Drehmoment demgegenüber oberhalb der momentan vom Elektromotor 2 erbrachten Leistung bzw. Drehmoment, also der Ist-Leistung bzw. dem Ist-Drehmoment, erhöht die Steuereinrichtung 12 über die Leistungselektronik 11 die elektrische Versorgung zumindest einer der Spulen 14 und/oder aktiviert eine zuvor deaktivierte Spule 14.

Die Steuereinrichtung 12 ist ferner derart ausgestaltet, dass sie bei Änderungen der elektrischen Versorgung einer der Spulen 14 die elektrische Versorgung der anderen Spulen 14 derart anpasst, dass das an der Motorwelle 4 abgegriffene Drehmoment keinen Sprung aufweist, also keine plötzlichen und ruckelhaften Änderungen im Betrieb des Elektromotors 2 auftreten.

## Patentansprüche

1. Elektromotorsystem (5), insbesondere für ein Kraftfahrzeug (1),
- mit einem Elektromotor (2), der zumindest vier Spulen (14) aufweist, die im Betrieb eine Motorwelle (4) des Elektromotors (2) antreiben,
- mit einer Leistungselektronik (11) zur elektrischen Versorgung der Spulen (14),
- mit einer Steuereinrichtung (12) zum Steuern des Elektromotorsystems (5),
- wobei die Leistungselektronik (11) für zumindest vier der wenigstens vier Spulen (14) jeweils eine zugehörige Brückenschaltung (18) aufweist, derart, dass diese zumindest vier Spulen (14) von der Leistungselektronik (11) unabhängig voneinander versorgt sind
**dadurch gekennzeichnet,**
**dass** die Steuereinrichtung (12) derart ausgestaltet ist, dass sie eine Leistungsanforderung an den Elektromotor (2) ermittelt und die elektrische Versorgung zumindest einer der Spulen (14) reduziert, wenn die vom Elektromotor (2) gelieferte Leistung oberhalb der Leistungsanforderung liegt.

2. Elektromotorsystem nach Anspruch 1,
**dadurch gekennzeichnet,**
**dass** zumindest eine der Brückenschaltungen (18) als eine Vollbrücke (19) ausgebildet ist.

3. Elektromotorsystem nach Anspruch 1 oder 2,
**dadurch gekennzeichnet,**
**dass** der Elektromotor (2) zumindest fünf Spulen (14) aufweist und die Leistungselektronik (11) für zumindest fünf der Spulen (14) jeweils eine zugehörige Brückenschaltung (18) aufweist.

4. Elektromotorsystem nach Anspruch 3,
**dadurch gekennzeichnet,**
**dass** der Elektromotor (2) fünf Spulen (14) aufweist und die Leistungselektronik (11) für die jeweilige Spule (14) eine zugehörige Brückenschaltung (18) aufweist.

5. Elektromotorsystem nach einem der Ansprüche 1 bis 4,
**dadurch gekennzeichnet,**
**dass** zumindest zwei der Spulen (14) identisch ausgebildet sind.

6. Elektromotorsystem nach einem der Ansprüche 1 bis 5,
**dadurch gekennzeichnet,**
**dass** die Steuereinrichtung (12) derart ausgestaltet ist, dass sie eine Leistungsanforderung an den Elektromotor ermittelt und die elektrische Versorgung zumindest einer der Spulen (14) erhöht, wenn die vom Elektromotor (2) gelieferte Leistung unterhalb der Leistungsanforderung liegt.

7. Elektromotorsystem nach einem der Ansprüche 1 bis 6,
**dadurch gekennzeichnet,**
**dass** die Steuereinrichtung (12) derart ausgestaltet ist, dass sie eine Leistungsanforderung an den Elektromotor (2) ermittelt und zumindest eine der Spulen (14) deaktiviert, wenn die Leistungsanforderung unterhalb der vom Elektromotor (2) gelieferten Leistung liegt.

8. Elektromotorsystem nach einem der Ansprüche 1 bis 7,
**dadurch gekennzeichnet,**
**dass** die Steuereinrichtung (12) derart ausgestaltet ist, dass sie beim Ausfall zumindest einer der Spule (14) und/oder bei einer Änderung der elektrischen Versorgung zumindest einer der Spulen (14) die elektrische Versorgung der anderen Spulen (14) derart angepasst, dass kein Sprung im von der Motorwelle (4) übertragenen Drehmoment erfolgt.

9. Kraftfahrzeug (1) mit einem Elektromotorsystem (5) nach einem der Ansprüche 1 bis 8.

10. Kraftfahrzeug nach Anspruch 9,
**dadurch gekennzeichnet,**
**dass** der Elektromotor (2) Bestandteil eines Lenkungsantriebs (8), einer Bremsanlage (7) oder einer Pumpe (6) des Kraftfahrzeugs (1) ist.

## Claims

1. Electric motor system (5), in particular for a motor vehicle (1),
- having an electric motor (2) which has at least four coils (14), which during operation drive a motor shaft (4) of the electric motor (2),
- having a power electronics (11) for the electrical supply of the coils (14),
- having a control device (12) for controlling the electric motor system (5),
- wherein the power electronics (11) have respectively one associated bridging circuit (18) for at least four of the at least four coils (14), such that these at least four coils (14) are supplied by the power electronics (11) independently of one another
**characterised in that**
the control device (12) is configured such that it determines a power requirement made of the electric motor (2) and reduces the electrical supply of at least one of the coils (14) when the power delivered by the electric motor (2) is above the power requirement.

2. Electric motor system according to claim 1,
**characterised in that**
at least one of the bridging circuits (18) is designed as a full bridge (19).

3. Electric motor system according to claim 1 or 2,
**characterised in that**
the electric motor (2) has at least five coils (14) and the power electronics (11) have respectively one associated bridging circuit (18) for at least five of the coils (14).

4. Electric motor system according to claim 3,
**characterised in that**
that the electric motor (2) has five coils (14) and the power electronics (11) have an associated bridging circuit (18) for the respective coil (14).

5. Electric motor system according to any of claims 1 to 4,
**characterised in that**
at least two of the coils (14) are identical in design.

6. Electric motor system according to any of claims 1 to 5,
**characterised in that**
the control device (12) is configured such that it determines a power requirement made of the electric motor and increases the electrical supply of at least one of the coils (14) when the power delivered by the electric motor (2) is below the power requirement.

7. Electric motor system according to any of claims 1 to 6,
**characterised in that**
the control device (12) is configured such that it determines a power requirement made of the electric motor (2) and deactivates at least one of the coils (14) when the power requirement is below the power delivered by the electric motor (2).

8. Electric motor system according to any of claims 1 to 7,
**characterised in that**
the control device (12) is configured such that if at least one of the coils (14) fails, or if there is a change in the electrical supply of at least one of the coils (14) the electrical supply to the other coils (14) is adapted such that there is no leap in the torque transmitted from the motor shaft (4).

9. Motor vehicle (1) with an electric motor system (5) according to any of claims 1 to 8.

10. Motor vehicle according to claim 9,
**characterised in that**
the electric motor (2) is a part of a steering drive (8), a braking system (7) or a pump (6) of the motor vehicle (1).

## Revendications

1. Système de moteur électrique (5), en particulier pour un véhicule automobile (1),
- avec un moteur électrique (2) qui présente au moins quatre bobines (14) qui entraînent en fonctionnement un arbre moteur (4) du moteur électrique (2),
- avec une électronique de puissance (11) pour l'alimentation électrique des bobines (14),
- avec un appareil de commande (12) pour la commande du système de moteur électrique (5),
- dans lequel l'électronique de puissance (11) pour au moins quatre des au moins quatre bobines (14) présente respectivement un circuit en pont (18) afférent de telle manière que ces au moins quatre bobines (14) soient alimentées indépendamment les unes des autres par l'électronique de puissance (11),
**caractérisé en ce que**
l'appareil de commande (12) est configuré de telle manière qu'il détermine une exigence de puissance posée au moteur électrique (2) et réduise l'alimentation électrique au moins d'une des bobines (14), lorsque la puissance fournie par le moteur électrique (2) se trouve au-dessus de l'exigence de puissance.

2. Système de moteur électrique selon la revendication 1,
**caractérisé en ce que**
au moins un des circuits en pont (18) est réalisé comme un pont plein (19).

3. Système de moteur électrique selon la revendication 1 ou 2,
**caractérisé en ce que**
le moteur électrique (2) présente au moins cinq bobines (14), et l'électronique de puissance (11) pour au moins cinq des bobines (14) présente respectivement un circuit en pont (18) afférent.

4. Système de moteur électrique selon la revendication 3,
**caractérisé en ce que**
le moteur électrique (2) présente cinq bobines (14), et l'électronique de puissance (11) pour la bobine (14) respective présente un circuit en pont (18) afférent.

5. Système de moteur électrique selon l'une des revendications 1 à 4,
**caractérisé en ce que**
au moins deux des bobines (14) sont réalisées de manière identique.

6. Système de moteur électrique selon l'une des revendications 1 à 5,
**caractérisé en ce que**
l'appareil de commande (12) est configuré de telle manière qu'il détermine une exigence de puissance posée au moteur électrique et augmente l'alimentation électrique au moins d'une des bobines (14) lorsque la puissance fournie par le moteur électrique (2) se trouve en dessous de l'exigence de puissance.

7. Système de moteur électrique selon l'une des revendications 1 à 6,
**caractérisé en ce que**
l'appareil de commande (12) est configuré de telle manière qu'il détermine une exigence de puissance posée au moteur électrique (2) et désactive au moins une des bobines (14) lorsque l'exigence de puissance se trouve en dessous de la puissance fournie par le moteur électrique (2).

8. Système de moteur électrique selon l'une des revendications 1 à 7,
**caractérisé en ce que**
l'appareil de commande (12) est configuré de telle manière qu'il adapte, lors d'une panne au moins d'une des bobines (14) et/ou lors d'une modification de l'alimentation électrique au moins d'une des bobines (14), l'alimentation électrique des autres bobines (14) de telle manière qu'aucun saut dans le couple transmis par l'arbre moteur (4) ne soit effectué.

9. Véhicule automobile (1) avec un système de moteur électrique (5) selon l'une des revendications 1 à 8.

10. Véhicule automobile selon la revendication 9,
**caractérisé en ce que**
le moteur électrique (2) fait partie d'un entraînement de direction (8), d'une installation de freinage (7) ou d'une pompe (6) du véhicule automobile (1).
